# EUROPEAN PATENT APPLICATION

(11) **EP 3 437 909 A1**
(43) Date of publication of application: **06.02.2019**
(21) Application number: 17774978.5
(22) Date of filing: 27.03.2017
(51) Int. Cl.: B60K 6/405, B60K 1/02, B60K 6/36, B60K 6/48, B60K 6/52, B60K 6/54, B60W 20/00, H02K 11/225, H02P 5/46, H02P 5/48

(54) **ELECTRIC MOTOR UNIT**

(30) Priority: 29.03.2016 JP 2016065530
(71) Applicant: Honda Motor Co., Ltd., Tokyo 107-8556 (JP)
(72) Inventor: YAMADA, Satoshi, Wako-shi Saitama 351-0193 (JP); YAZAKI, Manabu, Wako-shi Saitama 351-0193 (JP); HAYASHI, Nobuaki, Wako-shi Saitama 351-0193 (JP)
(74) Representative: Beder, Jens
(86) International application number: PCT/JP2017/012464
(87) International publication number: WO 2017/170441

(57) **Abstract**

A rear-wheel drive device 1 includes a first electric motor 102A and a second electric motor 102B, each of which includes an electric motor main body and a rotational-state-quantity detection device. The relative positions between the reference position MS1 of a stator 14A of the first electric motor 102A and the reference position RS1 of a resolver stator 93 of the first electric motor 102A and the relative positions between the reference position MS2 of a stator 14B of the second electric motor 102B and the reference position RS2 of a resolver stator 93 of the second electric motor 102B coincide with each other based on a rotational direction of the first electric motor 102A and the second electric motor 102B which is either the rotational direction during forward movement of a vehicle 3 or the rotational direction during backward movement.

## Description

### Technical Field

The present invention relates to an electric motor unit including two electric motors each including a rotational-state-quantity detection device.

### Background Art

In an electric motor, a resolver is provided as a rotational-state-quantity detection device which precisely detects the rotational position of an electric motor rotor with respect to an electric motor stator for performing accurate speed control on an electric motor main body in some cases. The resolver includes a resolver rotor and a resolver stator, and the resolver rotor is arranged so as to be integrally rotated with the electric motor rotor. Therefore, an output signal from the resolver is processed to detect the rotational position of the resolver rotor so that the rotational position of the electric motor rotor can be detected. An electric motor control device drives and controls the electric motor by converting a direct current voltage supplied from a direct current power supply into an alternating current voltage using an inverter and supplying the voltage to the electric motor based on the rotational position of the electric motor rotor detected by the resolver or the like. Specifically, the electric motor control device determines the phase of a current to be inputted to the electric motor based on the rotational position of the electric motor rotor or the like, and performs switching control on switching elements of the inverter according to the determination.

In this manner, the phase of the current to be inputted to the electric motor is determined based on the detection value of the resolver. Thus, in a case where the corresponding detection value has an error, the phase of the current to be inputted to the electric motor is different from the phase of a current to be actually inputted to the electric motor. Therefore, when the electric motor main body and the resolver are assembled, zero-point correction is performed in which the difference between the reference position of the electric motor stator and the reference position of the resolver stator is acquired and corrected.

For example, Patent Literature 1 discloses a vehicle drive device including two electric motors each including a resolver in a housing.

### Prior Art Literature

### Patent Literature

Patent Literature 1: Japanese Patent No. 5750501

### Summary of the Invention

### Problem that the Invention is to Solve

However, in Patent Literature 1, there is no description on how to set the reference position of the electric motor stator and the reference position of the resolver stator in left and right electric motors when performing zero-point correction. Accordingly, when zero-point correction is performed in the respective electric motors, there is concern that numerical management may be complicated.

The present invention provides an electric motor unit capable of easily performing zero-point correction in two electric motors each including a rotational-state-quantity detection device.

### Means for Solving the Problem

The present invention provides the following aspects.

According to a first aspect, an electric motor unit (e.g., a rear-wheel drive device 1 in an embodiment to be described below) including:
a first electric motor (e.g., a first electric motor 102A in the embodiment to be described below) that is connected to a left wheel (e.g., a left rear wheel LWr in the embodiment) of a vehicle (e.g., a vehicle 3 in the embodiment); and
a second electric motor (e.g., a second electric motor 102B in the embodiment) that is connected to a right wheel (e.g., a right rear wheel RWr in the embodiment) of the vehicle, wherein
the first electric motor and the second electric motor each includes:
   an electric motor main body (e.g., a first electric motor main body 2A and a second electric motor main body 2B in the embodiment) including a stator (e.g., stators 14A and 14B in the embodiment), and a rotor (e.g., rotors 15A and 15B in the embodiment) that is arranged to be relatively rotatable with respect to the stator; and
   a rotational-state-quantity detection device (e.g., resolvers 20A and 20B in the embodiment) including a detected element (e.g., a resolver rotor 90 in the embodiment) that is installed in the rotor or a rotary body (e.g., cylinder shafts 16A and 16B in the embodiment) that rotates in conjunction with the rotor, and a detector (e.g., a resolver stator 93 in the embodiment) that detects a rotational state of the detected element, and
   relative positions between a reference position (e.g., a reference position MS1 in the embodiment) of the stator of the first electric motor and a reference position (e.g., a reference position RS1 in the embodiment) of the detector of the first electric motor and
   relative positions between a reference position (e.g., a reference position MS2 in the embodiment) of the stator of the second electric motor and a reference position (e.g., a reference position RS2 in the embodiment) of the detector of the second electric motor coincide with each other based on a rotational direction of the first electric motor and the second electric motor during forward movement of the vehicle or during backward movement of the vehicle.

According to a second aspect, in addition to the configuration of the first aspect,
in the rotational direction, the reference position of the stator of the first electric motor and the reference position of the stator of the second electric motor are in same phase.

According to a third aspect, in addition to the configuration of the second aspect,
the first electric motor and the second electric motor are housed in a housing,
the electric motor main body of the first electric motor and the electric motor main body of the second electric motor are constituted of same members, and
the rotational-state-quantity detection device of the first electric motor and the rotational-state-quantity detection device of the second electric motor are constituted of same members.

### Advantageous Effects of the Invention

According to the first aspect, since the relative positions between the reference position of the stator of the first electric motor and the reference position of the detector of the first electric motor and the relative positions between the reference position of the stator of the second electric motor and the reference position of the detector of the second electric motor coincide with each other based on the rotational direction of the first electric motor and the second electric motor during forward movement or backward movement of the vehicle, a value serving as a guide when zero-point correction is performed is common, thereby easily performing numerical management.

According to the second aspect, since the reference position of the stator of the first electric motor and the reference position of the stator of the second electric motor are in the same phase based on the rotational direction of the first electric motor and the second electric motor during forward movement of the vehicle, the electric motors are easily assembled.

According to the third aspect, the number of parts can be reduced by sharing parts and thus the manufacturing cost can be reduced.

### Brief Description of the Drawings

Fig. 1 is a block diagram showing a schematic configuration of a hybrid vehicle as an embodiment on which an electric motor according to the present invention is mountable.
Fig. 2 is a vertical cross-sectional view of a rear-wheel drive device.
Fig. 3 is an enlarged cross-sectional view of an upper part of the rear-wheel drive device illustrated in Fig. 2.
Fig. 4A is a side view illustrating an end wall of a right side case housing a second electric motor on a right side as viewed from the right side.
Fig. 4B is a side view illustrating an end wall of a left side case housing a first electric motor on a left side as viewed from the left side.
Fig. 5A is a side view illustrating the second electric motor on the right side as viewed from the right side when removing the right side case.
Fig. 5B is a side view illustrating the first electric motor on the left side as viewed from the left side when removing the left side case.
Fig. 6 is an explanatory diagram illustrating zero-point correction.

### Mode for Carrying out the Invention

Hereinafter, an example of a hybrid vehicle as a vehicle on which an electric motor according to an embodiment is mountable will be described.

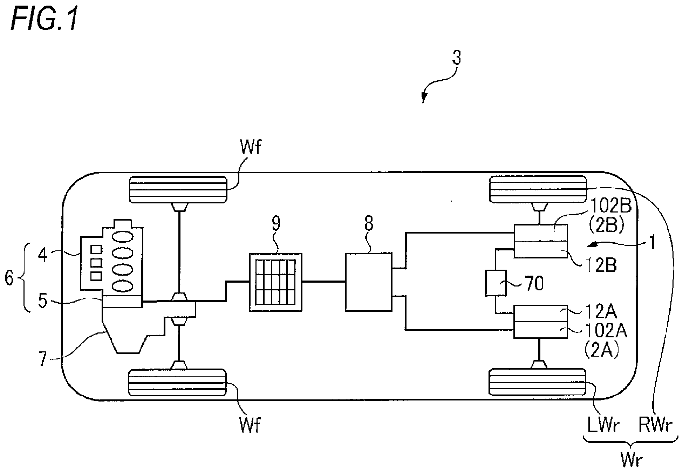

A vehicle 3 illustrated in Fig. 1 is a hybrid vehicle including a drive device 6 (hereinafter, referred to as a front-wheel drive device) at the front part of the vehicle, the drive device 6 being formed by connecting an electric motor 5 and an internal combustion engine 4 in series. While power of the front-wheel drive device 6 is transmitted to front wheels Wf through a transmission 7, power of a drive device 1 (hereinafter, referred to as a rear-wheel drive device), which is provided below a floor panel (not shown) in the rear part of the vehicle separately from the front wheel drive device 6, is transmitted to rear wheels Wr (RWr and LWr). The rear-wheel drive device 1 includes first and second electric motor main bodies 2A and 2B, power of the first electric motor main body 2A is transmitted to a left rear wheel LWr and power of the second electric motor main body 2B is transmitted to a right wheel RWr. The electric motor 5 of the front-wheel drive device 6, and first and, second electric motor main bodies 2A and 2B of the rear-wheel drive device 1 are connected to a battery 9, thereby enabling electric power supply from the battery 9 and energy regeneration to the battery 9.

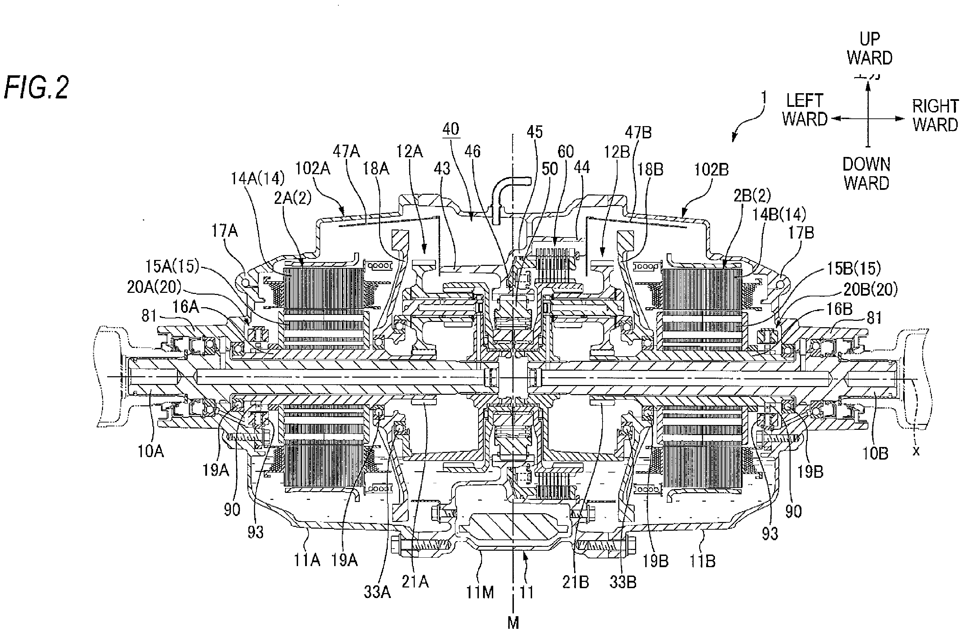

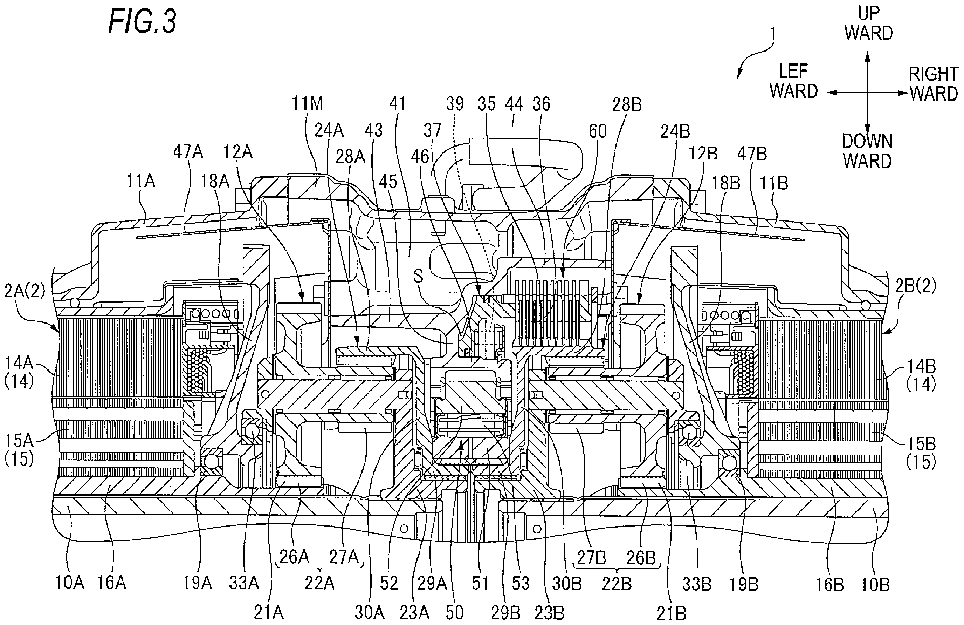

Fig. 2 is vertical cross-sectional view of the entire rear-wheel drive device 1, and Fig. 3 is an enlarged cross-sectional view of an upper part of the rear-wheel drive device illustrated in Fig. 2. A case 11 serving as a housing of the rear-wheel drive device 1 includes a central case 11M arranged in approximately the middle in a vehicle width direction (hereinafter, also referred to as a left and right direction of the vehicle), and a left side case 11A and a right side case 11B arranged on the right and left of the central case 11M so as to interpose the central case 11M. The entire case 11 is formed in a substantially cylindrical shape. Inside the case 11, axles 10A and 10B for the rear wheels Wr, first and second electric motor main bodies 2A and 2B for driving the axles, and first and second planetary gear speed reducers 12A and 12B for reducing the drive rotation of the first and second electric motor main bodies 2A and 2B are respectively arranged in parallel on the same rotation axis x. The axle 10A, the first electric motor main body 2A, and the first planetary gear speed reducer 12A drive and control the left rear wheel LWr, and the axle 10B, the second electric motor main body 2B, and the second planetary gear speed reducer 12B drive and control the right rear wheel RWr. The axle 10A, the first electric motor main body 2A, and the first planetary gear speed reducer 12A, and the axle 10B, the second electric motor main body 2B, and the second planetary gear speed reducer 12B are arranged symmetrically to a center surface M orthogonal to the rotation axis x and located at the center in the case 11 in the vehicle width direction.

Partition walls 18A and 18B extending radially inwardly are provided on the center case 11M side of the left and right side cases 11A and 11B and the first and second electric motor main bodies 2A and 2B are respectively arranged between end walls 17A and 17B and the partition walls 18A and 18B of the left and right side cases 11A and 11B, respectively. In addition, the first and second planetary gear speed reducers 12A and 12B are arranged in a space surrounded by the center case 11M and the partition walls 18A and 18B.

The rear-wheel drive device 1 is provided with a breather device 40 which communicates with the inside and the outside of the case 11 so that the internal air can escape through a breather chamber 41 in order to prevent the internal air from becoming excessively high in temperature and pressure. The breather chamber 41 is arranged vertically above the case 11, and is constituted of the space that is formed by the outer wall of the central case 11M, a first cylindrical wall 43 which extends toward the left side case 11A in a substantially horizontal direction in the central case 11M, a second cylindrical wall 44 which extends toward the right side case 11B in a substantially horizontal direction in the central case 11M, a right-and-left dividing wall 45 which connects the inner ends of the first and second cylindrical walls 43 and 44, a baffle plate 47A which is attached to come into contact with the distal end of the left side case 11A of the first cylindrical wall 43, and a baffle plate 47B which is attached to come into contact with the distal end of the right side case 11B of the second cylindrical wall 44.

The first and second cylindrical walls 43 and 44, and the right-and-left dividing wall 45 which forms the lower surface of the breather chamber 41 are formed so that the first cylindrical wall 43 is located radially inwardly from the second cylindrical wall 44, and the right-and-left dividing wall 45 extends from the inner end portion of the second cylindrical wall 44 to the inner end portion of the first cylindrical wall 43 while bending to reduce the size in the radial direction. The right-and-left dividing wall 45 further extends radially inwardly and reaches a third cylindrical wall 46 which extends in a substantially horizontal direction. The third cylindrical wall 46 is located at substantially the center on the inner side of both outer ends of the first cylindrical wall 43 and the second cylindrical wall 44.

In the central case 11M, the baffle plates 47A and 47B are fixed so as to partition the space between the first cylindrical wall 43 and the outer wall of the central case 11M, and the space between the second cylindrical wall 44 and the outer wall of the central case 11M in order to separate the first planetary gear speed reducer 12A and the second planetary gear speed reducer 12B, respectively.

In the first and second electric motor main bodies 2A and 2B, stators 14A and 14B are respectively fixed to the left and right side cases 11A and 11B, and ring-shaped rotors 15A and 15B are arranged to be relatively rotatable to the stators 14A and 14B within the inner circumference of the stators 14A and 14B. In the inner circumference of the rotors 15A and 15B, cylindrical shafts 16A and 16B, which respectively surround the outer circumference of the axles 10A and 10B, are secured thereto, and are supported through bearings 19A and 19B on the end walls 17A and 17B and the partition walls 18A and 18B of the side cases 11A and 11B, respectively, so that the cylindrical shafts 16A and 16B are rotatable relative to the axles 10A and 10B on the same axis.

In the end walls 17A and 17B on the outer circumference of one end side of the cylinder shafts 16A and 16B, a cylinder wall 81 which surrounds the axles 10A and 10B arranged to be relatively rotatable on the inner circumference of the cylinder shafts 16A and 16B is provided to extend. A resolver rotor 90 is attached to one end side of the cylinder shafts 16A and 16B as a detected element, and a resolver stator 93 is attached to the end walls 17A and 17B as a detector for detecting the rotational state of the resolver rotor 90 so as to face the outer diameter side of the resolver rotor 90. The resolver rotor 90 and the resolver stator 93 constitute the resolvers 20A and 20B and the resolvers 20A and 20B are provided for feeding back the rotational state quantities of the rotors 15A and 15B such as the rotation angles, angular speeds, and the number of revolutions to controllers (not shown) of the first and second electric motor main bodies 2A and 2B. In addition, since the resolver rotors 90 and the rotors 15A and 15B of the first and second electric motor main bodies 2A and 2B provided on the cylinder shafts 16A and 16B and the axles 10A and 10B are mechanically connected through the first and second planetary gear speed reducers 12A and 12B as described later, a wheel speed can be calculated from the rotational state quantities of the rotors 15A and 15B and the gear ratio. The resolver 20A constitutes a first electric motor 102A together with the first electric motor main body 2A and the resolver 20B constitutes a second electric motor 102B together with the second electric motor main body 2B.

The first and second planetary gear speed reducers 12A and 12B respectively include sun gears 21A and 21B, a plurality of planetary gears 22A and 22B engaged with the sun gears 21A and 21B, planetary carriers 23A and 23B for supporting the planetary gears 22A and 22B, and ring gears 24A and 24B engaged with the outer circumferential side of planetary gears 22A and 22B, and the drive rotations of the first and second electric motor main bodies 2A and 2B are inputted through the sun gears 21A and 21B, respectively, and reduced drive rotations are outputted to the axles 10A and 10B through the planetary carriers 23A and 23B.

The sun gears 21A and 21B are formed integrally with the cylindrical shafts 16A and 16B. The planetary gears 22A and 22B are each twin pinion including first major diameter pinions 26A and 26B which are directly engaged with the sun gears 21A and 21B, and second pinions 27A and 27B having a diameter smaller than that of the first pinions 26A and 26B. The first pinions 26A and 26B and the second pinions 27A and 27B are integrally formed on the same axis with an offset in the axial direction. The planetary gears 22A and 22B are supported by the planetary carriers 23A and 23B to be rotatable and revolvable, and the axial inner ends of the planetary carriers 23A and 23B extend radially inwardly to be spline-fitted to and supported by the axles 10A and 10B in an integrally rotatable manner, and are supported by the partition walls 18A and 18B through bearings 33A and 33B.

The ring gears 24A and 24B include gears portions 28A and 28B, the inner circumferential surfaces of which are engaged with the minor diameter second pinions 27A and 27B, minor diameter gear portions 29A and 29B which each have a diameter smaller than that of the gears portions 28A and 28B and are arranged to face each other at the middle position of the case 11, and coupling portions 30A and 30B which respectively radially couple the axially inner ends of the gears portions 28A and 28B to the axially outer ends of the minor diameter gear portions 29A and 29B.

The gear portions 28A and 28B are axially opposed to each other with respect to the third cylindrical wall 46, which is formed at the inner diameter end of the right-and-left dividing wall 45 of the central case 11M. The outer circumferential surfaces of the minor diameter gear portions 29A and 29B are each spline-fitted to an inner race 51 of the below-described one-way clutch 50, and the ring gears 24A and 24B are connected to the inner race 51 of the one-way clutch 50 so as to rotate integrally therewith.

A hydraulic brake 60 which serves as a braking device for the ring gear 24B is arranged between the second cylindrical wall 44 of the central case 11M included in the case 11, and the gear portion 28B of the ring gear 24B on the side of the second planetary gear speed reducer 12B so that the hydraulic brake radially overlaps with the first pinion 26B and axially overlaps with the second pinion 27B. In the hydraulic brake 60, a plurality of fixed plates 35 which are spline-fitted to the inner circumferential surface of the second cylindrical wall 44, and a plurality of rotary plates 36 which are spline-fitted to the outer circumferential surface of the gear portion 28B of the ring gear 24B are alternately arranged in the axial direction so that an engaging or releasing operation is performed on the plates 35 and 36 by a ring-shaped piston 37. The piston 37 is retractably housed in a ring-shaped cylinder chamber which is formed between the right-and-left dividing wall 45 of the central case 11M and the third cylindrical wall 46, and is further constantly biased by an elastic member 39 in a direction such that the fixed plates 35 and the rotary plates 36 are released, and the elastic member 39 is supported by a receiving member which is provided on the outer circumferential surface of the third cylindrical wall 46.

In addition, more specifically, between the right-and-left dividing wall 45 and the piston 37, an operating chamber into which oil is directly introduced is formed, and when the pressure of the oil introduced into the operating chamber S exceeds the biasing force of the elastic member 39, the piston 37 moves forward (moves to the right) so that the fixed plates 35 and the rotary plates 36 are pressed each other and then engaged. On the other hand, when the biasing force of the elastic member 39 exceeds the pressure of the oil introduced into the operating chamber S, the piston 37 moves backward (moves to the left) so that the fixed plates 35 and the rotary plates 36 are separated from each other and then released. The hydraulic brake 60 is connected to an electric oil pump 70 (refer to Fig. 1 and others).

In a case of the hydraulic brake 60, the fixed plates 35 are supported by the second cylindrical wall 44 extending from the right-and-left dividing wall 45 of the central case 11M which constitutes the case 11, while the rotary plates 36 are supported by the gear portion 28B of the ring gear 24B. Thus, when both plates 35 and 36 are pressed each other by the piston 37, frictional engagement between the plates 35 and 36 causes a braking force to be applied to the ring gear 24B which is then fixed. In the above-described state, when the engagement caused by the piston 37 is released, the ring gear 24B is allowed to rotate freely. As described above, the ring gears 24A and 24B are connected to each other, and thus engagement of the hydraulic brake 60 also causes a braking force to be applied to the ring gear 24A, and release of the hydraulic brake 60 also allows the ring gear 24A to rotate freely.

A space is also secured between the coupling portions 30A and 30B of the ring gears 24A and 24B which are axially opposed to each other, and in the space, the one-way clutch 50 is arranged which allows power to be transmitted to the ring gears 24A and 24B only in one direction and prevents power transmission in the other direction. The one-way clutch 50 is a clutch in which a large number of sprags 53 are interposed between the inner race 51 and an outer race 52, and has a configuration such that the inner race 51 rotates integrally with the minor-diameter gear portions 29A and 29B of the ring gears 24A and 24B by spline fitting. The outer race 52 is positioned and whirl-stopped by the third cylindrical wall 46.

The one-way clutch 50 is configured to engage and lock rotation of the ring gears 24A and 24B when the vehicle 3 moves forward under the power of the first and second electric motor main bodies 2A and 2B. More specifically, when forward direction (rotation direction when the vehicle 3 moves forward) rotational power of the first and second electric motor main bodies 2A and 2B is inputted to the rear wheels Wr, the one-way clutch 50 is set in an engaged state, and when reverse direction rotational power of the first and second electric motor main bodies 2A and 2B is inputted to the rear wheels Wr, the one-way clutch 50 is set in a disengaged state. When forward direction rotational power of the rear wheels Wr is inputted to the first and second electric motor main bodies 2A and 2B, the one-way clutch 50 is set in a disengaged state, and when reverse direction rotational power of the rear wheels Wr is inputted to the first and second electric motor main bodies 2A and 2B, the one-way clutch 50 is set in an engaged state.

Thus, in the rear-wheel drive device 1 in the embodiment, the one-way clutch 50 and the hydraulic brake 60 are provided in parallel on the power transmission path between the first and second electric motor main bodies 2A and 2B, and the rear wheels Wr. The hydraulic brake 60 is controlled in a released or engaged state, a partially engaged state, or an engaged state by the pressure of the oil supplied from the electric oil pump 70 according to a running state of the vehicle and an engaged or disengaged state of the one-way clutch 50. For example, when the vehicle 3 moves forward by driving power of the first and second electric motor main bodies 2A and 2B (at the time of low vehicle speed or medium vehicle speed), the one-way clutch 50 is engaged and thus is set in a state which allows power transmission. However, the hydraulic brake 60 is controlled to be in a partially engaged state, and thus input of forward direction rotational power from the first and second electric motor main bodies 2A and 2B is temporarily reduced, and even in a case where the one-way clutch 50 is set in a disengaged state, power transmission between the first and second electric motor main bodies 2A and 2B and the rear wheels Wr is possible. In addition, when the vehicle 3 moves forward by driving power of the internal combustion engine 4 and/or the electric motor 5 (at the time of high vehicle speed), the one-way clutch 50 is disengaged and the hydraulic brake 60 is further controlled in a released state, and thus excessive rotation of the first and second electric motor main bodies 2A and 2B is prevented. On the other hand, when the vehicle 3 moves backward or power regeneration is performed, the one-way clutch 50 is disengaged, and thus by controlling the hydraulic brake 60 to be in an engaged state, reverse direction rotational power of the first and second electric motor main bodies 2A and 2B is outputted to the rear wheels Wr, or forward direction rotational power of the rear wheels Wr is inputted to the first and second electric motor main bodies 2A and 2B.

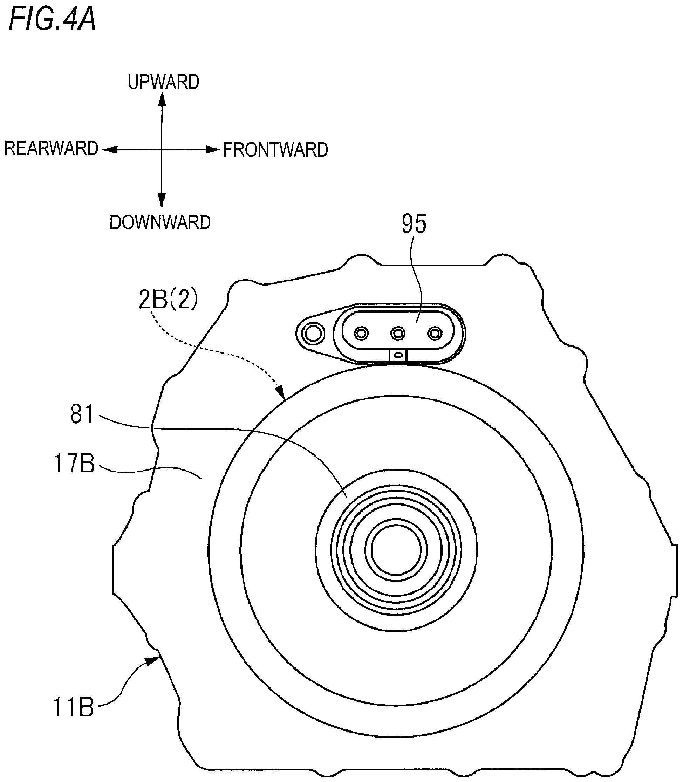

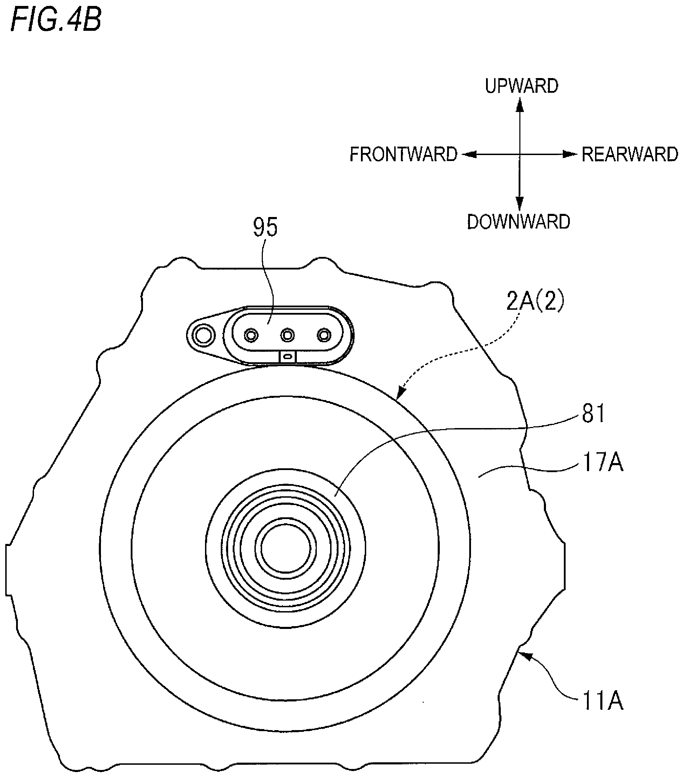

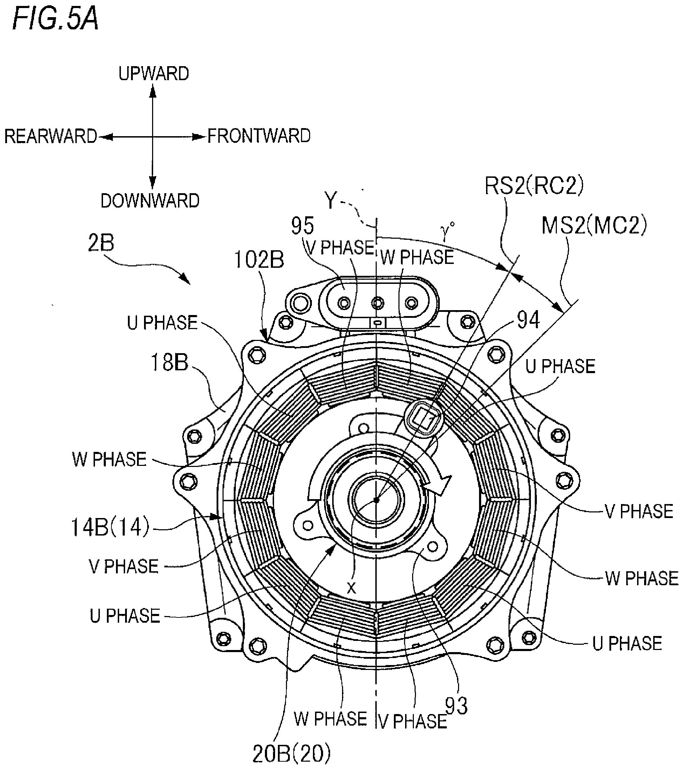

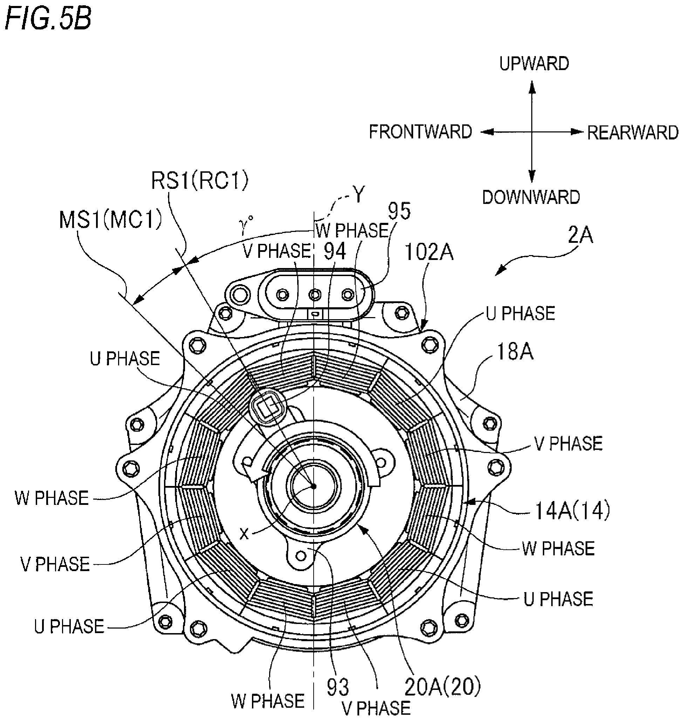

Here, the zero-point correction of the resolvers 20A and 20B (hereinafter, in a case where the resolvers 20A and 20B are not distinguished, the resolvers 20A and 20B are referred to as the resolver 20. The same applies to the first and second electric motor main bodies 2A and 2B, the stators 14A and 14B, and the rotors 15A and 15B.) will be described with reference to Figs. 4A to 6. Here, a case where the first and second electric motor main bodies 2A and 2B are three-phase alternating current electric motors and a zero-point correction process is performed based on a U phase will be described. In Figs. 4A, 4B, 5A, and 5B, reference numeral 95 indicates connectors of the first and second electric motor main bodies 2A and 2B, and the connector 95 of the first electric motor main body 2A is arranged on the end wall 17A of the left side case 11A so as to face the outer side (left direction), while the connector 95 of the second electric motor main body 2B is arranged on the end wall of the right side case 11B so as to face the outer side (right direction).

The zero-point correction is performed such that a predetermined current for zero-point correction is supplied to the stator 14 of the electric motor main body 2 and an induction voltage of the electric motor main body 2 obtained from the U phase is acquired. In addition, the rotor 15 is rotated by the current supplied to the stator 14, and the resolver rotor 90 rotates in conjunction with the rotation of the rotor 15 so that electrical angle signals generated from the resolver stator 93 can be acquired.

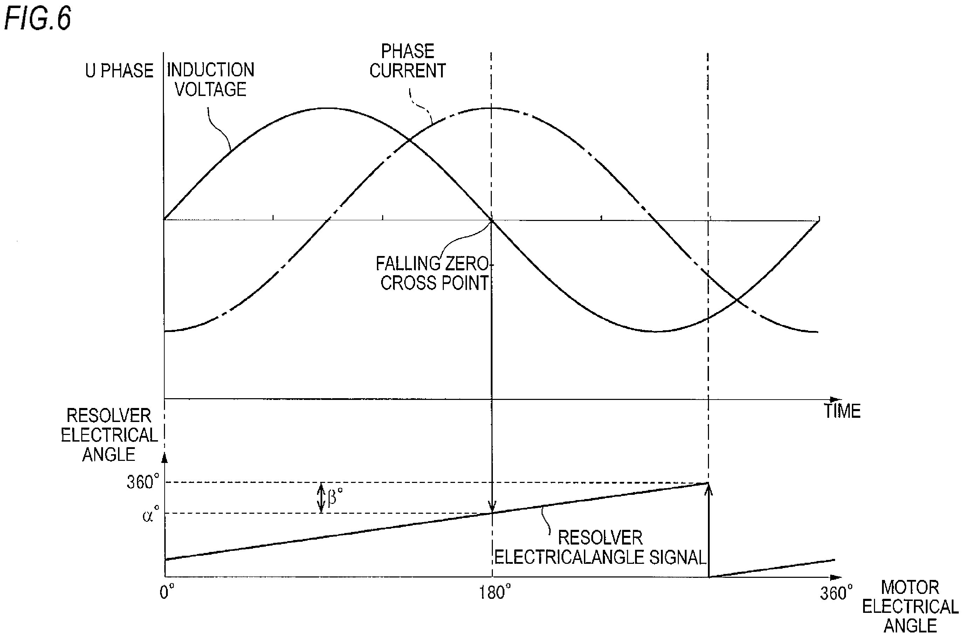

Fig. 6 shows a U-phase current, a U-phase induction voltage, and electrical angle signals of the resolver generated by the zero-point correction and the zero-point correction is performed by obtaining a correction amount from the relationship between the electrical angle of the U-phase current and the electrical angle of the resolver 20 and correcting the electrical angle of the resolver based on the correction amount. Specifically, for example, when the U-phase induction voltage is shifted from positive to negative (hereinafter, referred to as a falling zero-cross point), that is, when the phase of the U-phase induction voltage is 180°, the electrical angle (α°) of the resolver is detected, a value obtained by subtracting the detected electrical angle (α°) of the resolver from 360° is acquired as a correction value (β°), and the correction value is added to the electrical angle of the resolver.

The zero-point correction is performed on the left and right first and second electric motors 102A and 102B respectively since the electric motor main body 2, the resolver 20, and the case 11 respectively have size errors and assembly errors. However, when the left and right first and second electric motors 102A and 102B have completely irrelevant correction values, numerical management becomes complicated. Therefore, it is advantageous to have a common correction reference value which serves as a guide for a correction value from the viewpoint of numerical management.

In the present invention, relative positions between a reference position MS1 of the stator 14A of the first electric motor 102A and a reference position RS1 of the resolver stator 93 of the first electric motor 102A and relative positions between a reference position MS2 of the stator 14B of the second electric motor 102B and a reference position RS2 of the resolver stator 93 of the second electric motor 102B coincide with each other based on one of the rotational direction of the first electric main body 2A and the second electric main body 2B (in the embodiment, the rotational direction during forward movement of the vehicle 3).

Specifically, as shown in Figs. 5A and 5B, a U-phase coil center line MC1 passing through the center of one coil of four U-phase coils of the stator 14A of the first electric motor 102A in the circumferential direction and the rotation axis x is set to a reference position MS1 of the stator 14A, and a connector center line RC1 passing through the center of a connector 94 of the resolver stator 93 in the circumferential direction and the rotation axis x is set to a reference position RS1 of the resolver stator 93. On the other hand, a U-phase coil center line MC2 passing through the center of one coil of four U-phase coils of the stator 14B of the second electric motor 102B and the rotation axis x is set to a reference position MS2 of the stator 14B and a connector center line RC2 passing through the center of the connector 94 of the resolver stator 93 in the circumferential direction and the rotation axis x is set to a reference position RS2 of the resolver stator 93. In this manner, the relative positions between the U-phase coil center line MC1 and the connector center line RC1 in the first electric motor 102A and the relative positions between the U-phase coil center line MC2 and the connector center line RC2 in the second electric motor 102B coincide with each other based on the rotational direction of the first electric motor main body 2A and the second electric motor main body 2B when the vehicle 3 moves forward as indicated by an arrow in Figs. 5A and 5B, that is, a forward direction.

Here, any one of a plurality (four in the embodiment) of U-phase coils may be set as a reference. However, when the reference position RS1 of the stator 14A of the first electric motor 102A and the reference position RS2 of the stator 14B of the second electric motor 102B are set to have the same phase, that is, for example, a vertical line Y passing through the rotation axis x is set as a reference, the same phase (γ° in the embodiment) is preferably set from Y in the forward direction. Thus, the first and second electric motors 102A and 102B are easily assembled.

In addition, the reference is not limited to the U-phase coil and any one of a plurality of V-phase coils or W-phase coils may be used as a reference. Regarding the resolver stators 93, the reference position is not limited to the connector 94 and as long as the reference position is the same position in the left and right resolver stators 93, the reference position can be set to an arbitrary position.

Further, it is preferable that the first and second electric motor main bodies 2A and 2B are constituted of the same members and the resolvers 20A and 20B are constituted of the same members. Therefore, the number of parts can be reduced by sharing parts and thus the manufacturing cost can be reduced.

As described above, according to the embodiment, since the relative positions between the reference position MS1 of the stator 14A of the first electric motor 102A and the reference position RS1 of the resolver stator 93 of the first electric motor 102A and the relative positions between the reference position MS2 of the stator 14B of the second electric motor 102B and the reference position RS2 of the resolver stator 93 of the second electric motor 102B coincide with each other based on the rotational direction of the first electric motor main body 2A and the second electric motor main body 2B when the vehicle 3 moves forward, a value which serves as a guide is common during zero-point correction and numerical management becomes easy.

In addition, the present invention is not limited to the above-described embodiment and appropriate modifications, improvements, and the like can be made.

For example, in the above-described embodiment, a hybrid vehicle has been described as a vehicle for application. However, the present invention is not limited thereto and for example, an electric automobile only using a motor as a driving source may be used.

In addition, in the embodiment, the rear-wheel drive device 1 including the two first and second electric motor main bodies 2A and 2B, the first and second planetary gear speed reducers 12A and 12B, the case 11 for housing the first and second electric motor main bodies 2A and 2B and the first and second planetary gear speed reducers 12A and 12B, and the two resolvers 20A and 20B is described as an example. However, as the electric motor unit of the present invention, two electric motors may each include electric motor main bodies and rotational-state-quantity detection devices.

The present application is based on Japanese Patent Application (No. 2016-065530) filled on March 29, 2016, the contents of which are incorporated herein by reference.

### Description of Reference Numerals and Characters

1 Rear-wheel drive device (electric motor unit)
2A First electric motor main body (electric motor main body)
2B Second electric motor main body (electric motor main body)
3 Vehicle
14A, 14B Stator (stator)
15A, 15B Rotor (rotor)
16A, 16B Cylinder shaft (rotary body)
20A, 20B Resolver (rotational-state-quantity detection device)
90 Resolver rotor (detected element)
93 Resolver stator (detector)
MS1 Reference position (reference position of stator of first electric motor)
MS2 Reference position (reference position of stator of second electric motor)
RS1 Reference position (reference position of detector of first electric motor)
RS2 Reference position (reference position of detector of second electric motor)

## Claims

1. An electric motor unit comprising:
a first electric motor that is connected to a left wheel of a vehicle; and
a second electric motor that is connected to a right wheel of the vehicle, wherein
the first electric motor and the second electric motor each includes:
an electric motor main body including a stator, and a rotor that is arranged to be relatively rotatable with respect to the stator; and
a rotational-state-quantity detection device including a detected element that is installed in the rotor or a rotary body that rotates in conjunction with the rotor, and a detector that detects a rotational state of the detected element, and
relative positions between a reference position of the stator of the first electric motor and a reference position of the detector of the first electric motor and
relative positions between a reference position of the stator of the second electric motor and a reference position of the detector of the second electric motor coincide with each other based on a rotational direction of the first electric motor and the second electric motor during forward movement or during backward movement of the vehicle.

2. The electric motor unit according to Claim 1, wherein
in the rotational direction, the reference position of the stator of the first electric motor and the reference position of the stator of the second electric motor are in same phase.

3. The electric motor unit according to Claim 2, wherein
the first electric motor and the second electric motor are housed in a housing,
the electric motor main body of the first electric motor and the electric motor main body of the second electric motor are constituted of same members, and
the rotational-state-quantity detection device of the first electric motor and the rotational-state-quantity detection device of the second electric motor are constituted of same members.
